# FASCICULE DE BREVET EUROPEEN

(11) **EP 3 071 008 B1**
(45) Date de publication et mention de la délivrance du brevet: **27.09.2017**
(21) Numéro de dépôt: 14821705.2
(22) Date de dépôt: 14.11.2014
(51) Int. Cl.: A01B 73/04

(54) **MACHINE AGRICOLE, NOTAMMENT MACHINE POUR LA RECOLTE DE VEGETAUX, COMPORTANT DEUX UNITES DE TRAVAIL ANIMEES ARTICULEES A UN MEME BRAS LATERAL**
LANDWIRTSCHAFTLICHE MASCHINE ZUM ERNTEN VON PFLANZENMATERIALIEN MIT ZWEI AUF EINEM EINZIGEN QUERLENKER BEWEGTEN ANGETRIEBENEN ARBEITSEINHEITEN
AGRICULTURAL MACHINE, IN PARTICULAR MACHINE FOR HARVESTING PLANT MATTER, COMPRISING TWO DRIVEN WORKING UNITS THAT ARE ARTICULATED ON A SINGLE LATERAL ARM

(30) Priorité: 22.11.2013 FR 1361494
(43) Date de publication de la demande: 28.09.2016
(73) Titulaire: Kuhn S.A., 67700 Saverne (FR)
(72) Inventeur: BILLARD, Sylvain, F-67440 Reinhardsmunster (FR)
(74) Mandataire: Esch, Esther Evelyne
(86) Numéro de dépôt international: PCT/FR2014/052900
(87) Numéro de publication internationale: WO 2015/075356

(56) Documents cités:
- EP-A1- 0 672 336
- EP-A2- 1 175 819
- DE-A1- 19 646 495

## Description

La présente invention se rapporte à une machine agricole, notamment une machine agricole pour la récolte de végétaux, comportant :
- un châssis pouvant être attaché à un véhicule moteur susceptible de se déplacer dans une direction d'avancement,
- un bras relié au châssis et s'étendant entre une première extrémité latérale du bras et une deuxième extrémité latérale du bras,
- un premier dispositif d'articulation reliant le bras au châssis au voisinage de la première extrémité latérale, ce premier dispositif d'articulation autorisant le bras à être déplacé par rapport au châssis
   entre une position de travail, dans laquelle le bras s'étend latéralement par rapport au châssis,
   et une position de transport, dans laquelle le bras est pivoté par rapport au châssis de sorte à présenter, perpendiculairement à la direction d'avancement, un encombrement plus faible que dans la position de travail,
- une première unité de travail reliée au bras et s'étendant notamment, dans la position de travail du bras et en suivant une direction perpendiculaire à la direction d'avancement, depuis la deuxième extrémité latérale en direction de la première extrémité latérale,
- une deuxième unité de travail reliée au bras et s'étendant notamment, dans la position de travail du bras et en suivant une direction perpendiculaire à la direction d'avancement et orientée de la première extrémité latérale vers la deuxième extrémité latérale, depuis la deuxième extrémité latérale du bras,
- un deuxième dispositif d'articulation porté par le bras au voisinage de la deuxième extrémité latérale,
   le deuxième dispositif d'articulation reliant la deuxième unité de travail au bras, au voisinage de la deuxième extrémité latérale,
   le deuxième dispositif d'articulation autorisant la deuxième unité de travail à pivoter par rapport au bras autour d'un deuxième axe géométrique situé au voisinage de la deuxième extrémité latérale et orienté, lorsque le bras est en position de travail, sensiblement dans la direction d'avancement,
- un mécanisme de transmission destiné à animer des organes de travail des première et deuxième unités de travail, et étant notamment porté par le bras au voisinage de la deuxième extrémité latérale.

Une telle machine est connue du document EP 1 175 819 A2. Sur cette machine, la première unité de travail peut être articulée au bras au moyen d'un axe orienté sensiblement dans la direction d'avancement. Cet axe est situé sensiblement à mi-distance des première et deuxième extrémités latérales du bras. La première unité de travail s'étend entre ces première et deuxième extrémités latérales. Cette première unité de travail comporte des organes de travail qui, durant le travail, sont animés par un mécanisme de transmission notamment porté par le bras au voisinage de sa deuxième extrémité latérale. Ce mécanisme de transmission comporte un boîtier porté par le bras à proximité de sa deuxième extrémité latérale et une transmission s'étendant à l'avant du boîtier, en direction de la première unité de travail. En vue de suivre les mouvements de la première unité de travail autour de son axe d'articulation au bras, cette transmission doit comporter des liaisons articulées et/ou coulissantes. Une telle transmission augmente cependant la complexité et le coût de la machine. Une telle transmission suppose également une maintenance régulière et représente une source de défaillances. En sus, une telle transmission limite l'amplitude de pivotement de la première unité de travail autour de son axe d'articulation au bras. En effet, ses liaisons articulées et/ou coulissantes présentent une plage de variation angulaire et/ou de longueur limitée. Sur cette machine connue, chaque unité de travail est en mesure de pivoter dans un plan sensiblement perpendiculaire à la direction d'avancement. En revanche, dans une position de travail du bras, chaque unité de travail présente une orientation constante dans un plan sensiblement horizontal. Il en résulte que cette unité de travail n'est pas en mesure de s'escamoter face à un obstacle qu'elle rencontre pendant le travail. En pareil cas, cette unité de travail peut donc subir de sérieux dommages.

La présente invention a pour but de proposer une machine agricole, notamment une machine agricole pour la récolte de végétaux, qui ne présente pas les inconvénients précités.

A cet effet, l'invention est notamment caractérisée par le fait que
le deuxième dispositif d'articulation relie la première unité de travail au bras, au voisinage de la deuxième extrémité latérale,
le deuxième dispositif d'articulation autorise, pendant le travail, la première unité de travail à pivoter par rapport au bras autour d'un premier axe géométrique situé au voisinage de la deuxième extrémité latérale et orienté, lorsque le bras est en position de travail, sensiblement dans la direction d'avancement.

Ainsi, la première unité de travail est reliée au bras à proximité du mécanisme de transmission. Le premier axe géométrique autour duquel la première unité de travail peut pivoter par rapport au bras, est situé à proximité du mécanisme de transmission. Cet agencement autorise, avec un mécanisme de transmission simple et peu onéreux, une amplitude de pivotement importante de la première unité de travail autour du premier axe géométrique. Au travail, cette première unité de travail peut suivre fidèlement le profil du terrain sur lequel la machine évolue. La proximité du mécanisme de transmission et du premier axe géométrique permet de réduire le nombre de degrés de liberté que possède la transmission de mouvement vers les organes de travail de la première unité de travail. Il est notamment possible de supprimer une liaison coulissante au niveau de la transmission de mouvement depuis le bras vers les organes de travail de la première unité de travail.

L'invention est également caractérisée par le fait que
le deuxième dispositif d'articulation comporte un axe de pivotement orienté vers le haut dans la position de travail du bras,
le mécanisme de transmission est monté à pivotement sur le bras autour de l'axe de pivotement,
le mécanisme de transmission et au moins une des première et deuxième unités de travail peuvent, dans une position du bras dans laquelle le bras s'étend latéralement par rapport au châssis, pivoter conjointement autour dudit axe de pivotement.

Le possible pivotement de ladite au moins une des première et deuxième unités de travail autour de l'axe de pivotement permet à cette unité de travail de s'effacer vers l'arrière en cas de rencontre avec un obstacle. Ladite au moins une des première et deuxième unités de travail est ainsi préservée de dommages importants. Par ailleurs, le montage à pivotement du mécanisme de transmission sur le bras autour de l'axe de pivotement et son pivotement avec ladite au moins une des première et deuxième unités de travail autour de l'axe de pivotement, simplifient grandement le mécanisme de transmission. En effet, ce dernier n'a pas besoin de comporter une multitude d'articulations et/ou une liaison coulissante au niveau de la transmission de mouvement vers les organes de travail de ladite unité de travail pour permettre le pivotement de cette dernière autour de l'axe de pivotement.

La simplicité du mécanisme de transmission que permet l'invention, a pour conséquence une meilleure fiabilité de la machine en même temps qu'une maintenance réduite.

D'autres caractéristiques et avantages de l'invention ressortiront de la description ci-après avec référence aux dessins annexés qui représentent un exemple de réalisation non limitatif de la machine selon l'invention.

Sur ces dessins :
- la figure 1 représente une vue en perspective d'un exemple de réalisation d'une machine selon l'invention attelée à un tracteur ;
- la figure 2 représente une vue depuis l'arrière de l'exemple de réalisation ;
- la figure 3 représente une autre vue depuis l'arrière de l'exemple de réalisation ;
- la figure 4 représente une vue de détail en perspective de l'exemple de réalisation ;
- la figure 5 représente une autre vue de détail de l'exemple de réalisation ;
- la figure 6 représente une vue du dessus de l'exemple de réalisation ;
- la figure 7 représente une autre vue du dessus de l'exemple de réalisation.

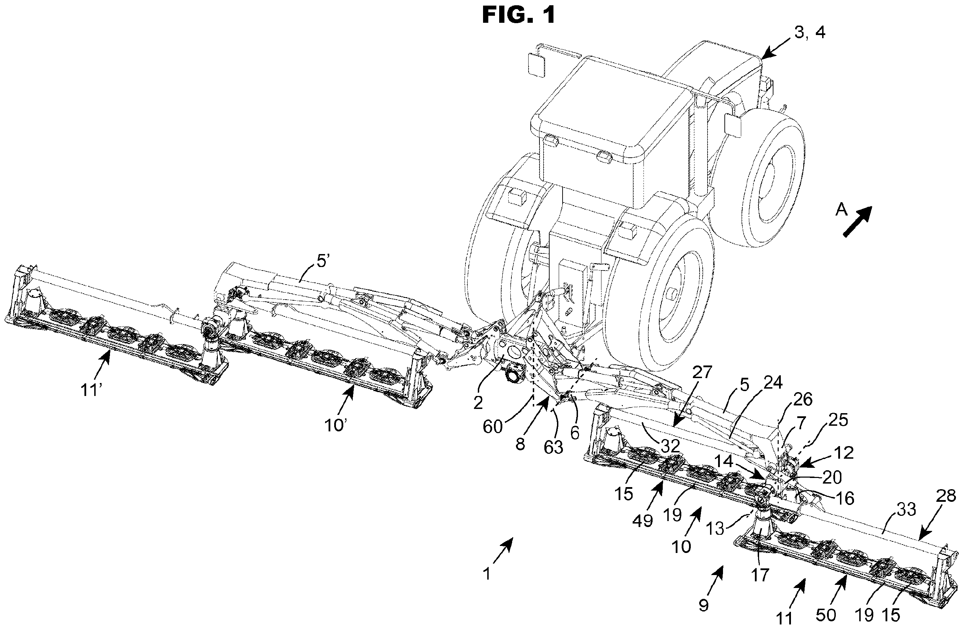

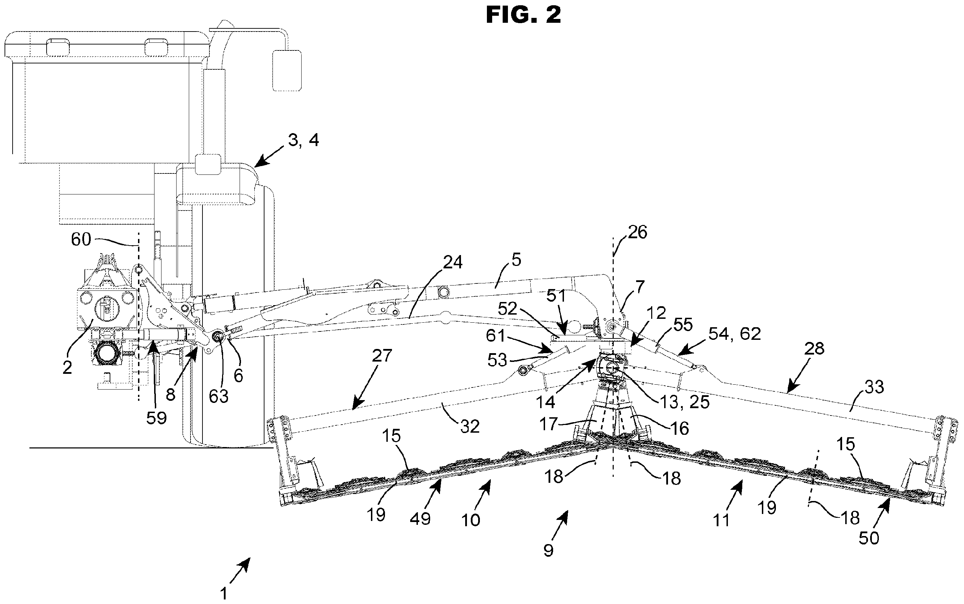

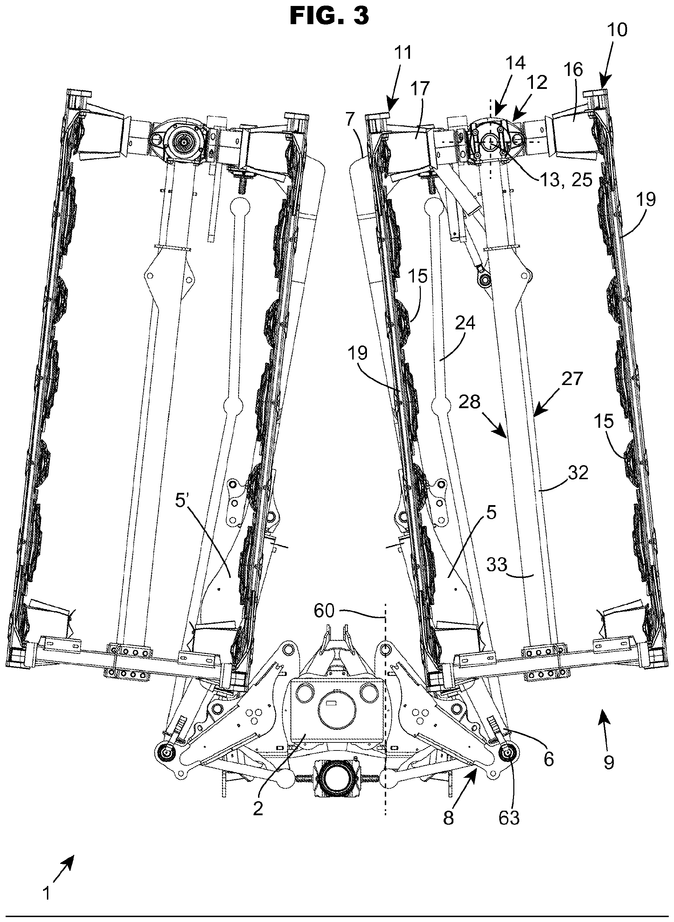

Telle qu'elle est représentée sur la figure 1, la machine (1) selon l'invention est une machine agricole pour la récolte de végétaux, notamment de fourrage. Cette machine (1) comporte un châssis (2). Le châssis (2) est conçu pour être attaché à un véhicule moteur (3) susceptible de se déplacer dans une direction d'avancement (A). Dans la suite de la description, les notions « avant », « arrière » et « derrière » sont définies par rapport à la direction d'avancement (A), tandis que les notions « haut » et « bas » sont définies par rapport au sol. Selon l'exemple de réalisation de la figure 1, le châssis (2) est conçu pour venir s'accrocher à l'attelage d'un tracteur (4), notamment à l'attelage situé à l'arrière du tracteur (4). La machine (1) comporte également un bras (5) relié au châssis (2). Le bras (5) s'étend entre une première extrémité latérale (6) du bras (5) et une deuxième extrémité latérale (7) du bras (5). Le bras (5) est, au voisinage de la première extrémité latérale (6), relié au châssis (2) par un premier dispositif d'articulation (8). Le premier dispositif d'articulation (8) autorise le bras (5) à être déplacé par rapport au châssis (2) entre une position de travail et une position de transport. Dans la position de travail des figures 1 et 2, le bras (5) s'étend latéralement par rapport au châssis (2). Selon l'exemple de réalisation des figures, dans la position de travail, le bras (5) s'étend sensiblement perpendiculairement à la direction d'avancement (A). Au moins dans la position de travail, la première extrémité latérale (6) du bras (5) se situe au voisinage du châssis (2), tandis que la deuxième extrémité latérale (7) se situe à plus grande distance du châssis (2). Selon l'exemple de réalisation, dans la position de travail du bras (5), la deuxième extrémité latérale (7) s'étend en dehors de la voie du véhicule moteur (3) constitué par un tracteur (4). Dans la position de transport du bras (5) représentée à la figure 3, ce dernier est pivoté par rapport au châssis (2) de sorte à présenter, perpendiculairement à la direction d'avancement (A), un encombrement plus faible que dans la position de travail. La machine (1) comporte un mécanisme de travail (9). Le mécanisme de travail (9) comporte notamment une première unité de travail (10) reliée au bras (5). Dans la position de travail du bras (5), cette première unité de travail (10) s'étend notamment, en suivant une direction perpendiculaire à la direction d'avancement (A), depuis la deuxième extrémité latérale (7) du bras (5) en direction de la première extrémité latérale (6). Suivant une vue arrière de la machine (1) au travail, donnée par la figure 2, la première unité de travail (10) s'étend en effet notamment entre les première et deuxième extrémités latérales (6 et 7) du bras (5). Suivant cette même vue arrière, la première unité de travail (10) s'étend essentiellement entre les première et deuxième extrémités latérales (6 et 7) du bras (5). Selon l'exemple de réalisation, dans la position de travail du bras (5), la première unité de travail (10) s'étend principalement entre la voie du véhicule moteur (3) et la deuxième extrémité latérale (7) du bras (5). Pendant le travail, la première unité de travail (10) s'étend sensiblement perpendiculairement à la direction d'avancement (A). Le mécanisme de travail (9) comporte également une deuxième unité de travail (11) reliée au bras (5). Dans la position de travail du bras (5), cette deuxième unité de travail (11) s'étend notamment, en suivant une direction perpendiculaire à la direction d'avancement (A) et orientée de la première extrémité latérale (6) vers la deuxième extrémité latérale (7), depuis la deuxième extrémité latérale (7) du bras (5). Suivant la vue arrière de la machine (1) au travail donnée par la figure 2, la deuxième unité de travail (11) s'étend en effet notamment depuis la deuxième extrémité latérale (7) du bras (5) et principalement au-delà du bras (5). Suivant cette même vue arrière, la deuxième unité de travail (11) s'étend dans le prolongement de la première unité de travail (10). Pendant le travail, la deuxième unité de travail (11) s'étend sensiblement perpendiculairement à la direction d'avancement (A). La machine (1) comporte également un deuxième dispositif d'articulation (12) porté par le bras (5) au voisinage de la deuxième extrémité latérale (7) de ce dernier. Le deuxième dispositif d'articulation (12) relie la deuxième unité de travail (11) au bras (5) au voisinage de la deuxième extrémité latérale (7). La deuxième unité de travail (11) se trouve ainsi portée par le bras (5) sensiblement au niveau de la deuxième extrémité latérale (7) du bras (5). Le deuxième dispositif d'articulation (12) autorise la deuxième unité de travail (11) à pivoter par rapport au bras (5) autour d'un deuxième axe géométrique (13) situé au voisinage de la deuxième extrémité latérale (7) et orienté, dans la position de travail du bras (5), sensiblement dans la direction d'avancement (A). Notamment pendant le travail, la deuxième unité de travail (11) peut pivoter autour du deuxième axe géométrique (13) de manière à suivre le profil du terrain. La machine (1) comporte par ailleurs un mécanisme de transmission (14) destiné à animer des organes de travail (15, 16, 17) des première et deuxième unités de travail (10 et 11). Ce mécanisme de transmission (14) est notamment porté par le bras (5) au voisinage de la deuxième extrémité latérale (7).

Chaque unité de travail (10, 11) est une unité de récolte des végétaux. Chaque unité de travail (10, 11) comporte au moins un organe de travail (15, 16, 17). Selon l'exemple de réalisation, un organe de travail (15, 16, 17) est un organe de coupe destiné à faucher les végétaux. L'organe de coupe est par exemple un rotor de coupe pouvant tourner autour d'un axe de rotation (18) qui, pendant le travail, est sensiblement vertical ou légèrement incliné vers l'avant. Ce rotor de coupe est formé par un disque ou un tambour muni de couteaux qui s'étendent au-delà de la périphérie dudit disque ou tambour. Les différents organes de travail (15, 16, 17) d'une unité de travail (10, 11) sont montés sur des paliers disposés à intervalles plus ou moins réguliers sur une barre (19) et sont, en fonctionnement, portés en rotation rapide au moyen d'un train de pignons incorporés dans un carter étanche contenant un lubrifiant tel que de l'huile. En étant mis en rotation, les couteaux d'un rotor de coupe viennent sectionner les végétaux s'élevant au-dessus du sol.

Au travail, il est prévu un recouvrement partiel entre la largeur de travail de la première unité de travail (10) et la largeur de travail de la deuxième unité de travail (11). La première unité de travail (10) comporte au moins un premier organe de travail (16). La deuxième unité de travail (11) comporte au moins un deuxième organe de travail (17). Selon l'exemple de réalisation représenté sur les figures 1 et 2, le premier organe de travail (16) se situe, perpendiculairement à la direction d'avancement (A), au niveau de la deuxième extrémité latérale (7) du bras (5). Selon cet exemple de réalisation, le deuxième organe de travail (17) se situe, perpendiculairement à la direction d'avancement (A), au niveau de la deuxième extrémité latérale (7) du bras (5). Une première largeur de travail du premier organe de travail (16), recouvre, au moins partiellement, une deuxième largeur de travail du deuxième organe de travail (17). Les première et deuxième largeurs de travail sont sensiblement identiques. Chaque largeur de travail d'une unité de travail (10, 11) respective est une largeur de travail continue. Le mécanisme de travail (9) présente une largeur de travail continue. En outre, au moins au travail, les première et deuxième unités de travail (10 et 11) sont décalées l'une par rapport à l'autre suivant la direction d'avancement (A). L'une (11) des première et deuxième unités de travail (10 et 11) est située immédiatement à l'arrière de l'autre (10) des première et deuxième unités de travail (10 et 11). Au travail, au moins un organe de travail (16) de la première unité de travail (10) ainsi qu'au moins un organe de travail (17) de la deuxième unité de travail (11), sont situés l'un derrière l'autre et à faible distance l'un de l'autre. Selon l'exemple de réalisation des figures, le premier organe de travail (16) et le deuxième organe de travail (17) sont situés l'un derrière l'autre et à faible distance l'un de l'autre. Suivant la direction d'avancement (A), les premier et deuxième organes de travail (16 et 17) sont distants l'un de l'autre d'une valeur inférieure à leurs largeurs de travail.

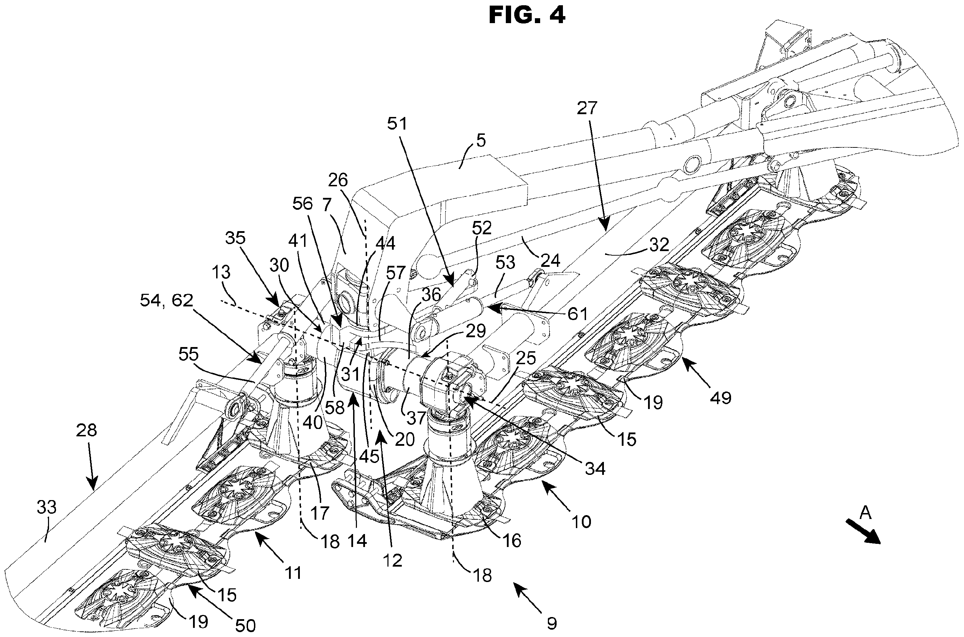

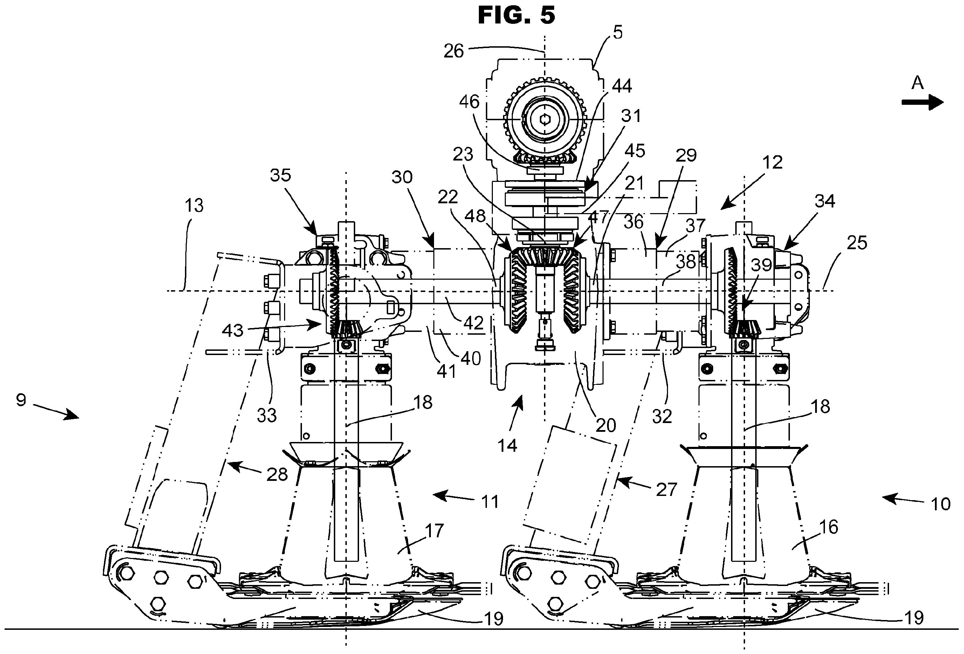

Selon l'exemple de réalisation illustré plus en détail aux figures 4 et 5, le mécanisme de transmission (14) comporte un boîtier (20) porté par le bras (5) au voisinage de la deuxième extrémité latérale (7). Ce boîtier (20) comporte une première sortie (21) vers au moins un organe de travail (16) de la première unité de travail (10). Le boîtier (20) comporte également une deuxième sortie (22) vers au moins un organe de travail (17) de la deuxième unité de travail (11). Selon l'exemple de réalisation, la première sortie (21) entraîne le premier organe de travail (16) placé au niveau de la deuxième extrémité latérale (7) du bras (5). De plus, la deuxième sortie (22) entraîne le deuxième organe de travail (17) placé au niveau de la deuxième extrémité latérale (7) du bras (5). Le premier organe de travail (16) transmet son mouvement de rotation aux autres organes de travail (15) de la première unité de travail (10) au moyen du train de pignons logé dans le carter de la première unité de travail (10). De même, le deuxième organe de travail (17) transmet son mouvement de rotation aux autres organes de travail (15) de la deuxième unité de travail (11) au moyen du train de pignons logé dans le carter de la deuxième unité de travail (11). Le boîtier (20) est relié à un moyen moteur permettant de mettre en mouvement les organes de travail (15, 16, 17) des première et deuxième unités de travail (10 et 11). Le moyen moteur peut être situé sur le véhicule moteur (3) ou sur la machine (1) elle-même. Selon l'exemple de réalisation illustré à la figure 5, le boîtier (20) comporte une entrée (23) reliée au moyen moteur. Cette entrée (23) est reliée à un premier arbre de transmission (24) représenté schématiquement à la figure 4 et s'étendant le long du bras (5) en direction du châssis (2). Ce premier arbre de transmission (24) est mis en mouvement à partir du moyen moteur constitué par une prise de force du tracteur (4).

L'invention est notamment caractérisée par le fait que le deuxième dispositif d'articulation (12) relie la première unité de travail (10) au bras (5), au voisinage de la deuxième extrémité latérale (7) du bras (5). En sus, le deuxième dispositif d'articulation (12) autorise, pendant le travail, la première unité de travail (10) à pivoter par rapport au bras (5) autour d'un premier axe géométrique (25), notamment pour suivre le profil du terrain. Ce premier axe géométrique (25) est situé au voisinage de la deuxième extrémité latérale (7) du bras (5). Le premier axe géométrique (25) est situé, perpendiculairement à la direction d'avancement (A), au niveau de la deuxième extrémité latérale (7). Lorsque le bras (5) est en position de travail, le premier axe géométrique (25) est orienté sensiblement dans la direction d'avancement (A). La proximité du premier axe géométrique (25) et du mécanisme de transmission (14), tous deux placés au voisinage de la deuxième extrémité latérale (7) du bras (5), autorise un pivotement de grande amplitude de la première unité de travail (10) par rapport au bras (5), notamment pendant le travail. L'amplitude de ce pivotement n'est pas limitée par le mécanisme de transmission (14).

L'invention est également caractérisée par le fait que le deuxième dispositif d'articulation (12) comporte un axe de pivotement (26) orienté vers le haut dans la position de travail du bras (5). En sus, le mécanisme de transmission (14) est monté à pivotement sur le bras (5) autour de l'axe de pivotement (26). Enfin, le mécanisme de transmission (14) et au moins une des première et deuxième unités de travail (10 et 11) peuvent, dans une position du bras (5) dans laquelle le bras (5) s'étend latéralement par rapport au châssis (2), pivoter conjointement autour de l'axe de pivotement (26). Ce pivotement conjoint peut notamment avoir lieu quand le bras (5) est en position de travail. Le montage d'au moins une des première et deuxième unités de travail (10 et 11) autour de l'axe de pivotement (26) sensiblement vertical permet à cette unité de travail (10, 11) de s'effacer vers l'arrière en cas de collision avec un obstacle, sans subir de dommages importants. Dans ce cas, le pivotement conjoint du mécanisme de transmission (14) évite que les chocs et secousses subis par l'unité de travail (10, 11) ne soient transmis aux parties mobiles du mécanisme de transmission (14). La fiabilité du mécanisme de transmission (14) s'en trouve améliorée.

Selon une caractéristique avantageuse de l'invention,
ladite au moins une des première et deuxième unités de travail (10 et 11) comporte un bâti (27, 28),
le bâti (27, 28) porte au moins un organe de travail (15, 16, 17) pouvant être animé en rotation par rapport au bâti (27, 28) au moyen du mécanisme de transmission (14) et autour d'un axe de rotation (18) demeurant, pendant le travail, au moins sensiblement immobile par rapport au bâti (27, 28),
le bâti (27, 28) est porté par le bras (5), de manière articulée, par l'intermédiaire d'un premier palier (29, 30) lié au bâti (27, 28) et ayant pour axe le premier ou deuxième axe géométrique (25, 13) correspondant de ladite au moins une des première et deuxième unités de travail (10 et 11), et d'un deuxième palier (31) lié au premier palier (29, 30) et au bras (5) et ayant pour axe l'axe de pivotement (26).

Ladite au moins une des première et deuxième unités de travail (10 et 11) est ainsi articulée au bras (5) via deux paliers (29 et 31, 30 et 31) disposés l'un à la suite de l'autre et entre le bras (5) et le bâti (27, 28) correspondant. Un tel agencement est simple et peu onéreux.

La première unité de travail (10) comporte un premier bâti (27). La deuxième unité de travail (11) comporte un deuxième bâti (28). Le premier bâti (27), respectivement le deuxième bâti (28), est rigide, exempt de sections articulées les unes aux autres. Le premier bâti (27) comporte une première poutre (32). Le deuxième bâti (28) comporte une deuxième poutre (33). Au travail, la première poutre (32), respectivement la deuxième poutre (33), s'étend sensiblement perpendiculairement à la direction d'avancement (A). De plus, elle s'étend au-dessus des organes de travail (15, 16, 17) de l'unité de travail (10, 11) correspondante. En vue du dessus de la machine (1) au travail, la première poutre (32), respectivement la deuxième poutre (33), s'étend sensiblement entre les extrémités latérales de la barre (19) portant les organes de travail (15, 16, 17) de l'unité de travail (10, 11) correspondante. Ainsi qu'il ressort de la figure 4, la première poutre (32) comporte, à son extrémité latérale voisine de la deuxième extrémité latérale (7) du bras (5), un premier carter de renvoi (34). Ce premier carter de renvoi (34) porte le premier organe de travail (16) et permet de l'animer autour de son axe de rotation (18). La deuxième poutre (33) comporte, à son extrémité latérale voisine de la deuxième extrémité latérale (7) du bras (5), un deuxième carter de renvoi (35). Ce deuxième carter de renvoi (35) porte le deuxième organe de travail (17) et permet de l'animer autour de son axe de rotation (18).

Le premier bâti (27) est porté par le bras (5) par l'intermédiaire notamment d'un premier palier (29) lié au premier bâti (27). Ce premier palier (29) a pour axe le premier axe géométrique (25). La partie fixe (36) de ce premier palier (29) est liée au mécanisme de transmission (14), tandis que la partie tournante (37) de ce premier palier (29) est liée au premier bâti (27). Selon l'exemple de réalisation de la figure 4, la partie fixe (36) du premier palier (29) est liée au boîtier (20). La partie tournante (37) est liée au premier carter de renvoi (34). La première sortie (21) du boîtier (20) est liée à un premier arbre (38) traversant le premier palier (29) et s'étendant vers des moyens de transmission (39) logés à l'intérieur du premier carter de renvoi (34). Le boîtier (20) et le premier carter de renvoi (34) sont reliés l'un à l'autre de manière sensiblement étanche par l'intermédiaire du premier palier (29). Le premier arbre (38) se trouve donc avantageusement protégé des salissures. En sus, le risque que des végétaux ne viennent s'enrouler autour du premier arbre (38) pendant le travail est exclu. Le premier arbre (38) est coaxial au premier axe géométrique (25). Un tel agencement permet de s'affranchir d'une liaison coulissante et/ou articulée (cannelures, cardan) au niveau de la transmission de mouvement entre la première sortie (21) et le premier carter de renvoi (34). Selon un agencement similaire, le deuxième bâti (28) est porté par le bras (5) par l'intermédiaire notamment d'un autre premier palier (30) lié au deuxième bâti (28). Cet autre premier palier (30) a pour axe le deuxième axe géométrique (13). La partie fixe (40) de cet autre premier palier (30) est liée au mécanisme de transmission (14), tandis que la partie tournante (41) de cet autre premier palier (30) est liée au deuxième bâti (28). Selon l'exemple de réalisation des figures, la partie fixe (40) de l'autre premier palier (30) est liée au boîtier (20). La partie tournante (41) est liée au deuxième carter de renvoi (35). La deuxième sortie (22) du boîtier (20) est liée à un deuxième arbre (42) traversant l'autre premier palier (30) et s'étendant vers des moyens de transmission (43) logés à l'intérieur du deuxième carter de renvoi (35). Le boîtier (20) et le deuxième carter de renvoi (35) sont reliés l'un à l'autre de manière sensiblement étanche par l'intermédiaire de l'autre premier palier (30). Le deuxième arbre (42) se trouve donc avantageusement protégé des salissures. En sus, le risque que des végétaux ne viennent s'enrouler autour du deuxième arbre (42) pendant le travail est exclu. Le deuxième arbre (42) est coaxial au deuxième axe géométrique (13). Un tel agencement permet de s'affranchir d'une liaison coulissante et/ou articulée (cannelures, cardan) au niveau de la transmission de mouvement entre la deuxième sortie (22) et le deuxième carter de renvoi (35).

Ainsi qu'il apparaît aux figures 4 et 5, le premier bâti (27) est porté par le bras (5) par l'intermédiaire également d'un deuxième palier (31) lié au premier palier (29) et au bras (5). La partie fixe (44) de ce deuxième palier (31) est liée au bras (5), tandis que la partie tournante (45) de ce deuxième palier (31) est liée au mécanisme de transmission (14). Selon l'exemple de réalisation, la partie tournante (45) du deuxième palier (31) est liée au boîtier (20). Par suite, la partie tournante (45) du deuxième palier (31) est liée à la partie fixe (36) du premier palier (29). De plus, le boîtier (20) est monté à pivotement sur le bras (5) au moyen du deuxième palier (31) ayant pour axe l'axe de pivotement (26). Ainsi, le mécanisme de transmission (14), en plus d'assurer l'animation des organes de travail (15, 16) de la première unité de travail (10), forme un élément porteur de la première unité de travail (10). Par cet élément porteur, le premier bâti (27) de la première unité de travail (10) est directement porté par le bras (5). Cette conception permet de réduire le poids de la machine (1), plus particulièrement le poids des éléments suspendus par rapport au châssis (2). Le mécanisme de transmission (14) et le premier bâti (27) forment un ensemble rigide en rotation dans un plan perpendiculaire à l'axe de pivotement (26). Le mécanisme de transmission (14) suit donc les mouvements que la première unité de travail (10) effectue autour de l'axe de pivotement (26). Selon un agencement similaire, le deuxième bâti (28) est porté par le bras (5) par l'intermédiaire du deuxième palier (31) également lié à l'autre premier palier (30). En effet, la partie tournante (45) du deuxième palier (31) est liée, via le boîtier (20), à la partie fixe (40) de l'autre premier palier (30). Ainsi, le mécanisme de transmission (14), en plus d'assurer l'animation des organes de travail (15, 17) de la deuxième unité de travail (11), forme un élément porteur de la deuxième unité de travail (11). Par cet élément porteur, le deuxième bâti (28) de la deuxième unité de travail (11) est directement porté par le bras (5). Le mécanisme de transmission (14) et le deuxième bâti (28) forment un ensemble rigide en rotation dans un plan perpendiculaire à l'axe de pivotement (26). Le mécanisme de transmission (14) suit donc les mouvements que la deuxième unité de travail (11) effectue autour de l'axe de pivotement (26).

Ainsi, selon une caractéristique avantageuse de l'invention, le deuxième dispositif d'articulation (12) est configuré pour que dans une position du bras (5) dans laquelle ce dernier s'étend latéralement par rapport au châssis (2), notamment dans la position de travail du bras (5),
le mécanisme de transmission (14) et la première unité de travail (10) puissent pivoter conjointement autour de l'axe de pivotement (26),
et le mécanisme de transmission (14) et la deuxième unité de travail (11) puissent pivoter conjointement autour de l'axe de pivotement (26).

Le mécanisme de transmission (14) peut ainsi s'affranchir d'une multitude d'articulations et/ou d'une liaison coulissante au niveau de la transmission de mouvement vers les organes de travail (15, 16) de la première unité de travail (10), ainsi que vers ceux de la deuxième unité de travail (11). En sus, chaque unité de travail (10, 11) peut pivoter autour de l'axe de pivotement (26) en cas de collision du mécanisme de travail (9) avec un obstacle. Le pivotement conjoint du mécanisme de transmission (14) et de cette unité de travail (10, 11) évite que les chocs et secousses subis par le mécanisme de travail (9) ne soient transmis aux parties mobiles du mécanisme de transmission (14).

Selon l'exemple de réalisation de l'invention, la première unité de travail (10), la deuxième unité de travail (11) et le mécanisme de transmission (14) peuvent pivoter conjointement autour de l'axe de pivotement (26). Pendant le travail, les efforts résistants subis par la première unité de travail (10) et qui tendent à la faire pivoter vers l'arrière par rapport au bras (5), se trouvent ainsi en plus ou moins grande proportion compensés par les efforts résistants subis simultanément par la deuxième unité de travail (11). L'invention prévoit en particulier que le mécanisme de transmission (14), le premier bâti (27) et le deuxième bâti (28) forment un ensemble rigide en rotation dans un plan perpendiculaire à l'axe de pivotement (26).

Selon une caractéristique avantageuse de l'invention, le premier axe géométrique (25) de la première unité de travail (10) croise au moins sensiblement l'axe de pivotement (26). Cette caractéristique permet notamment de lier l'entrée (23) du boîtier (20) à un deuxième arbre de transmission (46) coaxial à l'axe de pivotement (26) et d'aménager, au sein du boîtier (20), un premier renvoi d'angle (47) à engrenages entre ce deuxième arbre de transmission (46) et le premier arbre (38). Cette caractéristique permet aussi de réduire les contraintes mécaniques subies par le mécanisme de transmission (14), notamment par le deuxième palier (31) et par le boîtier (20), lorsque la première unité de travail (10) pivote autour du premier axe géométrique (25). Selon l'exemple de réalisation, le premier axe géométrique (25) croise l'axe de pivotement (26).

Selon une autre caractéristique avantageuse de l'invention, le deuxième axe géométrique (13) de la deuxième unité de travail (11) croise au moins sensiblement l'axe de pivotement (26). Cette caractéristique permet notamment de lier l'entrée (23) du boîtier (20) au deuxième arbre de transmission (46) et d'aménager, au sein du boîtier (20), un deuxième renvoi d'angle (48) à engrenages entre ce deuxième arbre de transmission (46) et le deuxième arbre (42). Cette caractéristique permet aussi de réduire les contraintes mécaniques subies par le mécanisme de transmission (14), notamment par le deuxième palier (31) et par le boîtier (20), lorsque la deuxième unité de travail (11) pivote autour du deuxième axe géométrique (13). Selon l'exemple de réalisation, le deuxième axe géométrique (13) croise l'axe de pivotement (26).

On notera encore, dans l'exemple de réalisation des figures 4 et 5, que chacun des premier et deuxième axes géométriques (25 et 13) croise au moins sensiblement l'axe de pivotement (26). Par ailleurs, les premier et deuxième axes géométriques (25 et 13) sont alignés.

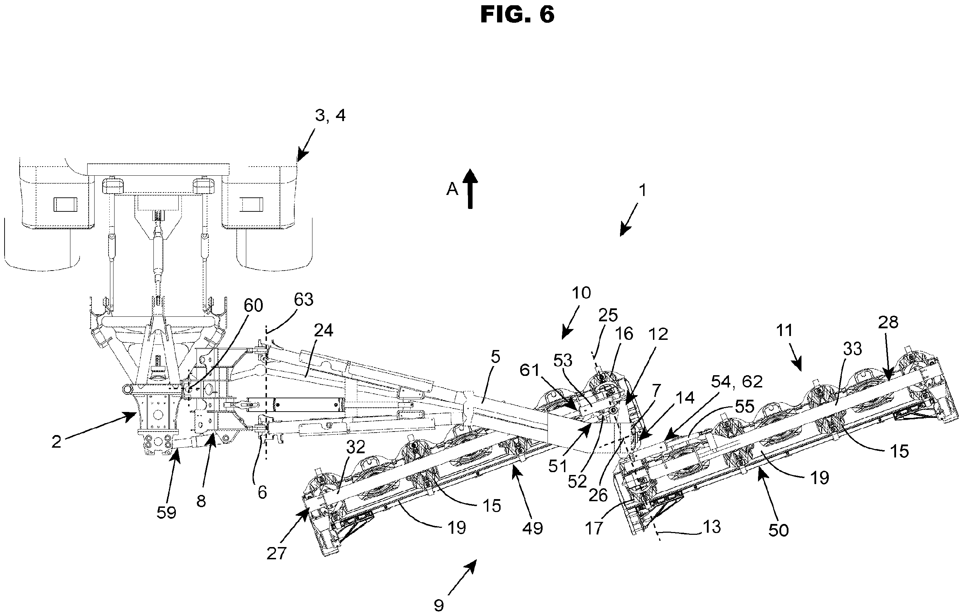

Ainsi qu'il ressort notamment de la figure 1, la première unité de travail (10) comporte une première portion (49) disposée, dans la position de travail du bras (5) et en suivant une direction perpendiculaire à la direction d'avancement (A), entre la première extrémité latérale (6) et la deuxième extrémité latérale (7). Au travail, cette première portion (49) occupe une première position de travail. Selon l'exemple de réalisation, dans cette première position de travail, la première portion (49) s'étend sensiblement perpendiculairement à la direction d'avancement (A). Selon une caractéristique avantageuse de l'invention, dans une position du bras (5) dans laquelle ce dernier s'étend latéralement par rapport au châssis (2), la première portion (49) peut quitter la première position de travail par le biais d'un premier pivotement vers l'arrière par rapport au bras (5), autour de l'axe de pivotement (26). Ce premier pivotement peut notamment se produire dans la position de travail du bras (5). Ce premier pivotement vers l'arrière place la première portion (49) de la première unité de travail (10) dans une position par rapport au bras (5) qui est représentée aux figures 4 et 6. Cette position est une position de sécurité que la première unité de travail (10) peut rejoindre lorsque la première portion (49) heurte un obstacle. Cela peut notamment se produire en cas de collision entre cet obstacle et un organe de travail (15, 16) et/ou le bâti (27) de la première portion (49).

Ainsi qu'il ressort notamment de la figure 1, la deuxième unité de travail (11) comporte une deuxième portion (50) disposée, dans la position de travail du bras (5) et en suivant une direction perpendiculaire à la direction d'avancement (A) et orientée de la première extrémité latérale (6) vers la deuxième extrémité latérale (7), au-delà de la deuxième extrémité latérale (7). Au travail, cette deuxième portion (50) occupe une deuxième position de travail. Selon l'exemple de réalisation, dans cette deuxième position de travail, la deuxième portion (50) s'étend sensiblement perpendiculairement à la direction d'avancement (A). La figure 6 montre que dans une position du bras (5) dans laquelle ce dernier s'étend latéralement par rapport au châssis (2), la deuxième portion (50) peut quitter la deuxième position de travail par le biais d'un deuxième pivotement vers l'avant par rapport au bras (5), autour de l'axe de pivotement (26). Ce deuxième pivotement peut notamment se produire dans la position de travail du bras (5) visible à la figure 6.

Selon l'exemple de réalisation, le premier pivotement et le deuxième pivotement sont liés l'un à l'autre. Le premier pivotement induit le deuxième pivotement. En effet, le premier bâti (27) et le deuxième bâti (28) forment un ensemble rigide en rotation dans un plan perpendiculaire à l'axe de pivotement (26).

La machine (1) selon l'invention comporte avantageusement un premier moyen de déclenchement (51) disposé entre le bras (5) et la première ou la deuxième unité de travail (10, 11). Le premier moyen de déclenchement (51) autorise le premier pivotement de la première portion (49), seulement lorsqu'un effort exercé sur la première portion (49) entraîne un effort sur le premier moyen de déclenchement (51) dépassant un premier seuil déterminé. Ainsi, pendant le travail, le premier moyen de déclenchement (51) maintient normalement la première portion (49) dans une orientation sensiblement perpendiculaire à la direction d'avancement (A). Toutefois, en cas de collision avec un obstacle entraînant sur le premier moyen de déclenchement (51) un effort supérieur au premier seuil, la première portion (49) peut s'effacer en direction de sa position de sécurité. Selon l'exemple de réalisation de la figure 4, le premier moyen de déclenchement (51) comporte un vérin de déclenchement (52) articulé au bras (5) et au premier bâti (27), plus précisément au bras (5) et au boîtier (20) du mécanisme de transmission (14).

Selon une caractéristique avantageuse de l'invention, lorsque le premier moyen de déclenchement (51) autorise le premier pivotement de la première portion (49), le premier moyen de déclenchement (51) induit un pivotement supplémentaire vers le haut de la première portion (49) autour du premier axe géométrique (25). Ainsi, les organes de travail (15, 16) de la première portion (49) sont relevés du sol et peuvent passer au-dessus d'un obstacle du type pierre ou souche d'arbre à l'origine du déclenchement. D'éventuels dommages subis par la première unité de travail (10) sont ainsi considérablement réduits. Selon l'exemple de réalisation représenté à la figure 4, un premier vérin (53) est articulé entre le premier bâti (27) et le bras (5) ou le mécanisme de transmission (14). Une variation de longueur de ce premier vérin (53) fait pivoter la première unité de travail (10) autour du premier axe géométrique (25). Le premier vérin (53) est hydrauliquement relié au vérin de déclenchement (52). De la sorte, lorsque le vérin de déclenchement (52) autorise le premier pivotement autour de l'axe de pivotement (26), il commande le premier vérin (53) pour que celui-ci relève simultanément la première portion (49) autour du premier axe géométrique (25).

Selon une caractéristique avantageuse de la machine (1), celle-ci comporte un deuxième moyen de déclenchement (54) disposé entre le bras (5) et la première ou la deuxième unité de travail (10, 11). Lorsque la deuxième portion (50) effectue le deuxième pivotement, le deuxième moyen de déclenchement (54) induit un pivotement supplémentaire vers le haut de la deuxième portion (50) autour du deuxième axe géométrique (13). Ce pivotement supplémentaire vers le haut de la deuxième portion (50) réduit sa surface de frottement au sol, donc facilite le pivotement conjoint de la première portion (49) vers l'arrière autour de l'axe de pivotement (26). En sus, le pivotement supplémentaire vers le haut de la deuxième portion (50) réduit le risque que la deuxième portion (50) ne heurte, lors de son deuxième pivotement vers l'avant, un obstacle situé à l'avant de la machine (1). Selon l'exemple de réalisation de la figure 4, un deuxième vérin (55) est articulé entre le deuxième bâti (28) et le bras (5) ou le mécanisme de transmission (14). Une variation de longueur de ce deuxième vérin (55) fait pivoter la deuxième unité de travail (11) autour du deuxième axe géométrique (13). Le deuxième vérin (55) est hydrauliquement relié au vérin de déclenchement (52). De la sorte, lorsque le vérin de déclenchement (52) autorise le premier pivotement autour de l'axe de pivotement (26), il commande le deuxième vérin (55) pour que celui-ci relève simultanément la deuxième portion (50) autour du deuxième axe géométrique (13).

Selon une caractéristique avantageuse de l'invention, la machine (1) comporte un moyen de butée (56) autorisant le premier pivotement vers l'arrière de la première portion (49) de la première unité de travail (10) depuis la première position de travail. A l'inverse, le moyen de butée (56) limite, voire empêche, un pivotement de la première portion (49) vers l'avant par rapport au bras (5), autour de l'axe de pivotement (26), depuis la première position de travail. Ainsi, le moyen de butée (56) évite que la première portion (49) n'entre en collision avec des parties du châssis (2) situées à l'avant de la machine (1) et/ou avec des parties du véhicule moteur (3). Cet effet avantageux sera compris à l'examen de la figure 6 sur laquelle on distingue une roue du tracteur (4) placée en avant de la première extrémité latérale (6) du bras (5). Selon l'exemple de réalisation, le moyen de butée (56) évite une telle collision entre l'organe de travail (15) le plus proche du châssis (2) et la roue du tracteur (4) disposée du même côté. Selon la représentation donnée à la figure 4, le moyen de butée (56) comporte par exemple une première partie (57) liée au mécanisme de transmission (14) et une deuxième partie (58) liée au bras (5). Ces deux parties (57 et 58) peuvent pivoter l'une par rapport à l'autre autour de l'axe de pivotement (26), librement dans un sens mais de manière limitée dans l'autre sens.

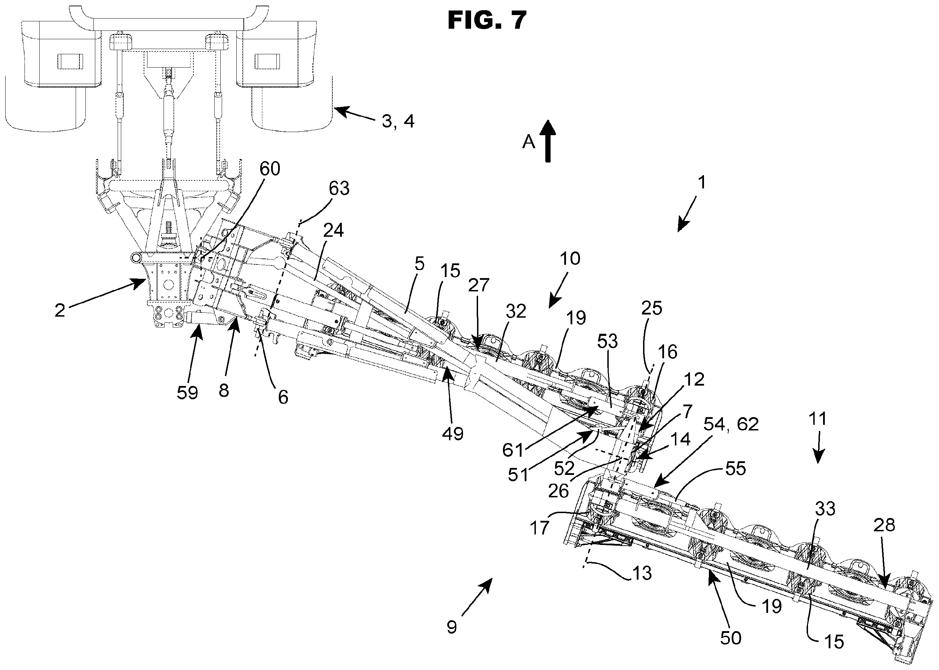

Le moyen de butée (56) peut en outre être configuré pour limiter, voire empêcher, un pivotement de la deuxième portion (50) vers l'arrière par rapport au bras (5), autour de l'axe de pivotement (26), depuis une deuxième position relative au bras (5) occupée par la deuxième portion (50) pendant le travail de la machine (1). Ainsi, si pendant le travail, la deuxième portion (50) heurte un obstacle situé devant elle, la deuxième unité de travail (11) conserve sa position initialement occupée par rapport au bras (5). De manière à protéger la deuxième unité de travail (11) en pareil cas, l'invention prévoit un troisième moyen de déclenchement (59) relié au châssis (2). Ce troisième moyen de déclenchement (59) autorise le bras (5) à s'effacer vers l'arrière par rapport au véhicule moteur (3), lorsqu'un effort exercé sur le bras (5) entraîne un effort sur le troisième moyen de déclenchement (59) dépassant un troisième seuil déterminé. Ainsi, en cas de collision de la deuxième portion (50) avec un obstacle placé devant elle, la deuxième unité de travail (11) peut pivoter vers l'arrière par rapport au véhicule moteur (3), autour d'un axe (60) dirigé vers le haut et situé par exemple au niveau du châssis (2). Le bras (5) et la deuxième unité de travail (11) sont ainsi orientés tel que représenté à la figure 7. Selon l'exemple de réalisation de cette figure, le troisième moyen de déclenchement (59) est articulé entre le bras (5) et le châssis (2). Il comporte par exemple un vérin. Le premier dispositif d'articulation (8) reliant le bras (5) au châssis (2) comporte l'axe (60) dirigé vers le haut autour duquel le bras (5) peut pivoter vers l'arrière. En outre, l'invention peut prévoir qu'au travail, une collision de la première portion (49) avec un obstacle entraîne un déclenchement conjoint des premier et troisième moyens de déclenchement (51 et 59). Dans ce cas, la première portion (49) pivote vers l'arrière par rapport au bras (5), autour de l'axe de pivotement (26) (figure 6), tandis que le bras (5) pivote vers l'arrière par rapport au véhicule moteur (3) (figure 7).

Selon une caractéristique avantageuse de l'invention, le deuxième dispositif d'articulation (12) autorise chacune des première et deuxième unités de travail (10 et 11) à pivoter par rapport au bras (5) en position de travail, autour de son premier ou deuxième axe géométrique (25, 13) respectif, vers le haut et vers le bas à partir d'une position horizontale, indépendamment de l'autre des première et deuxième unités de travail (10 et 11). Cette caractéristique ressort notamment de la figure 2. Ainsi, chaque unité de travail (10, 11) est en mesure de bien suivre le profil du terrain. Grâce à l'indépendance des pivotements respectifs, le mécanisme de travail (9) présente une bonne adaptation au sol, y compris avec des unités de travail (10 et 11) de grande largeur.

De manière à présenter une bonne qualité de travail, la machine (1) comporte un moyen d'allégement (61, 62) des première et deuxième unités de travail (10 et 11). Celui-ci est disposé entre le bras (5) et l'une au moins des première et deuxième unités de travail (10 et 11). Selon l'exemple de réalisation, un premier moyen d'allégement (61) est articulé entre le premier bâti (27) et le bras (5) ou le mécanisme de transmission (14). Un deuxième moyen d'allégement (62) est articulé entre le deuxième bâti (28) et le bras (5) ou le mécanisme de transmission (14). Ainsi qu'il apparaît à la figure 4, le premier moyen d'allégement (61) comporte par exemple le premier vérin (53), tandis que le deuxième moyen d'allégement (62) comporte par exemple le deuxième vérin (55).

Selon une caractéristique avantageuse, la machine (1) est transposée d'une configuration de travail (figure 1) vers une configuration de manoeuvre et/ou de transport (figure 3), par des pivotements respectifs de même sens, de la deuxième unité de travail (11) par rapport au bras (5) et du bras (5) par rapport au châssis (2). La configuration de manoeuvre, non représentée, est par exemple utilisée pour faire passer les première et deuxième unités de travail (10 et 11) au-dessus d'un obstacle ou d'un andain. Elle est située entre la configuration de travail et la configuration de transport.

Selon l'exemple de réalisation, le premier dispositif d'articulation (8) comporte un axe d'articulation (63). Dans la position de travail du bras (5), l'axe d'articulation (63) est orienté sensiblement dans la direction d'avancement (A). Pendant le travail, le bras (5) peut pivoter vers le haut et vers le bas autour de l'axe d'articulation (63), de sorte que les première et deuxième unités de travail (10 et 11) se déplacent verticalement pour suivre le profil du terrain. Pour passer de la configuration de travail vers la configuration de manoeuvre et/ou de transport, le bras (5) est pivoté vers le haut par rapport au châssis (2), autour de l'axe d'articulation (63). Pour passer de la configuration de travail vers la configuration de manoeuvre et/ou de transport, la deuxième unité de travail (11) est pivotée par rapport au bras (5) dans le même sens que le bras (5) par rapport au châssis (2), à savoir vers le haut autour du deuxième axe géométrique (13). Cette cinématique permet, pour les manoeuvres et/ou pour le transport, de relever la deuxième unité de travail (11) du sol dans des proportions importantes. De plus, cette cinématique permet une transposition aisée de la machine (1) vers la configuration de manoeuvre et/ou de transport même lorsqu'elle se trouve sur un terrain surélevé du côté où se trouve la deuxième unité de travail (11).

Selon une caractéristique avantageuse, la machine (1) est transposée de la configuration de travail vers la configuration de transport, par des pivotements respectifs de même sens,
de la deuxième unité de travail (11) par rapport au bras (5), d'un angle compris entre 90° et 180°, autour du deuxième axe géométrique (13),
et du bras (5) par rapport au châssis (2), autour de l'axe d'articulation (63).

Ainsi, dans la configuration de transport de la machine (1), le mécanisme de travail (9) occupe une largeur réduite. Avec le bras (5) replié vers le haut par rapport au châssis (2), le mécanisme de travail (9) présente une hauteur réduite, voisine de la moitié de sa largeur totale de travail. Selon l'exemple de réalisation de la figure 3, le bras (5) s'étend sensiblement verticalement ou quelque peu au-delà de la verticale dans la configuration de transport de la machine (1). La deuxième unité de travail (11) est pivotée autour du deuxième axe géométrique (13) d'un angle voisin de 180°. Ce pivotement d'environ 180° est facilité par le décalage des première et deuxième unités de travail (10 et 11) entre elles suivant la direction d'avancement (A). Ce même décalage permet à la deuxième unité de travail (11) repliée d'environ 180° de s'étendre derrière le bras (5) et de s'inscrire plus ou moins dans l'encombrement de ce dernier, vu depuis l'arrière de la machine (1).

Selon une autre caractéristique avantageuse, la machine (1) est transposée de la configuration de travail vers la configuration de transport
par pivotement vers le haut de la deuxième unité de travail (11) par rapport au bras (5) en position de travail, autour du deuxième axe géométrique (13), d'un angle compris entre 90° et 180°,
puis par pivotement vers le haut du bras (5) par rapport au châssis (2).

Ainsi, la transposition de la configuration de travail vers la configuration de transport prévoit une première phase au cours de laquelle la première unité de travail (10) demeure au sol. Durant cette première phase, la deuxième unité de travail (11) est pivotée autour du deuxième axe géométrique (13). Selon l'exemple de réalisation, l'angle de ce pivotement est voisin de 180°. La deuxième unité de travail (11) rejoint alors la position qu'elle occupe finalement par rapport au bras (5) dans la configuration de transport de la machine (1). La deuxième unité de travail (11) peut ainsi être pivotée sans que la machine (1) ne soit déstabilisée, car la première unité de travail (10) sert d'appui au sol. Seulement dans un deuxième temps, le bras (5) est pivoté vers le haut autour de l'axe d'articulation (63). La stabilité supplémentaire permise par ce séquencement des mouvements autorise des unités de travail (10 et 11) de grande largeur et/ou des unités de travail (10 et 11) présentant, au travail, un déport latéral important par rapport au véhicule moteur (3). Ce séquencement permet aussi de diminuer la puissance que doit fournir la machine (1) ou le véhicule moteur (3) pour piloter les actionneurs nécessaires à la transposition de la configuration de travail vers la configuration de transport.

Selon l'exemple de réalisation, la machine (1) selon l'invention peut comporter, outre un bras (5) et deux unités de travail (10 et 11) disposés sur un côté du châssis (2), un second bras (5') portant deux autres unités de travail (10' et 11') disposés sur l'autre côté du châssis (2). Une telle conception permet d'obtenir une très grande largeur de travail, par exemple comprise entre dix et quinze mètres.

Bien entendu, l'invention n'est pas limitée à l'exemple de réalisation décrit et représenté sur les figures annexées. Des modifications restent possibles, notamment du point de vue de la constitution, de la disposition ou du nombre des divers éléments, par combinaison différente des caractéristiques susvisées, ou par substitution d'équivalents techniques, sans sortir pour autant du domaine de protection de l'invention tel que défini dans les revendications.

## Revendications

1. Machine (1) agricole, notamment machine (1) agricole pour la récolte de végétaux, comportant :
- un châssis (2) pouvant être attaché à un véhicule moteur (3) susceptible de se déplacer dans une direction d'avancement (A),
- un bras (5) relié au châssis (2) et s'étendant entre une première extrémité latérale (6) du bras (5) et une deuxième extrémité latérale (7) du bras (5),
- un premier dispositif d'articulation (8) reliant le bras (5) au châssis (2) au voisinage de la première extrémité latérale (6), ce premier dispositif d'articulation (8) autorisant le bras (5) à être déplacé par rapport au châssis (2)
entre une position de travail, dans laquelle le bras (5) s'étend latéralement par rapport au châssis (2),
et une position de transport, dans laquelle le bras (5) est pivoté par rapport au châssis (2) de sorte à présenter, perpendiculairement à la direction d'avancement (A), un encombrement plus faible que dans la position de travail,
- une première unité de travail (10) reliée au bras (5) et s'étendant notamment, dans la position de travail du bras (5) et en suivant une direction perpendiculaire à la direction d'avancement (A), depuis la deuxième extrémité latérale (7) en direction de la première extrémité latérale (6),
- une deuxième unité de travail (11) reliée au bras (5) et s'étendant notamment, dans la position de travail du bras (5) et en suivant une direction perpendiculaire à la direction d'avancement (A) et orientée de la première extrémité latérale (6) vers la deuxième extrémité latérale (7), depuis la deuxième extrémité latérale (7) du bras (5),
- un deuxième dispositif d'articulation (12) porté par le bras (5) au voisinage de la deuxième extrémité latérale (7),
le deuxième dispositif d'articulation (12) reliant la deuxième unité de travail (11) au bras (5), au voisinage de la deuxième extrémité latérale (7),
le deuxième dispositif d'articulation (12) autorisant la deuxième unité de travail (11) à pivoter par rapport au bras (5) autour d'un deuxième axe géométrique (13) situé au voisinage de la deuxième extrémité latérale (7) et orienté, lorsque le bras (5) est en position de travail, sensiblement dans la direction d'avancement (A),
- un mécanisme de transmission (14) destiné à animer des organes de travail (15, 16, 17) des première et deuxième unités de travail (10 et 11), et étant notamment porté par le bras (5) au voisinage de la deuxième extrémité latérale (7),
***caractérisée en ce que***
le deuxième dispositif d'articulation (12) relie la première unité de travail (10) au bras (5), au voisinage de la deuxième extrémité latérale (7),
le deuxième dispositif d'articulation (12) autorise, pendant le travail, la première unité de travail (10) à pivoter par rapport au bras (5) autour d'un premier axe géométrique (25) situé au voisinage de la deuxième extrémité latérale (7) et orienté, lorsque le bras (5) est en position de travail, sensiblement dans la direction d'avancement (A),
le deuxième dispositif d'articulation (12) comporte un axe de pivotement (26) orienté vers le haut dans la position de travail du bras (5),
le mécanisme de transmission (14) est monté à pivotement sur le bras (5) autour de l'axe de pivotement (26),
le mécanisme de transmission (14) et au moins une des première et deuxième unités de travail (10 et 11) peuvent, dans une position du bras (5) dans laquelle le bras (5) s'étend latéralement par rapport au châssis (2), pivoter conjointement autour de l'axe de pivotement (26).

2. Machine selon la revendication 1, ***caractérisée en ce que***
ladite au moins une des première et deuxième unités de travail (10 et 11) comporte un bâti (27, 28),
le bâti (27, 28) porte au moins un organe de travail (15, 16, 17) pouvant être animé en rotation par rapport au bâti (27, 28) au moyen du mécanisme de transmission (14) et autour d'un axe de rotation (18) demeurant, pendant le travail, au moins sensiblement immobile par rapport au bâti (27, 28),
le bâti (27, 28) est porté par le bras (5), de manière articulée, par l'intermédiaire d'un premier palier (29, 30) lié au bâti (27, 28) et ayant pour axe le premier ou deuxième axe géométrique (25, 13) correspondant de ladite au moins une des première et deuxième unités de travail (10 et 11), et d'un deuxième palier (31) lié au premier palier (29, 30) et au bras (5) et ayant pour axe l'axe de pivotement (26).

3. Machine selon la revendication 1 ou 2, ***caractérisée en ce que*** le premier ou deuxième axe géométrique (25, 13) correspondant de ladite au moins une des première et deuxième unités de travail (10 et 11), croise au moins sensiblement l'axe de pivotement (26).

4. Machine selon l'une quelconque des revendications 1 à 3, ***caractérisée en ce que*** le deuxième dispositif d'articulation (12) est configuré pour que dans une position du bras (5) dans laquelle le bras (5) s'étend latéralement par rapport au châssis (2),
le mécanisme de transmission (14) et la première unité de travail (10) puissent pivoter conjointement autour de l'axe de pivotement (26),
et le mécanisme de transmission (14) et la deuxième unité de travail (11) puissent pivoter conjointement autour de l'axe de pivotement (26).

5. Machine selon l'une quelconque des revendications 1 à 4, ***caractérisée en ce que***
la première unité de travail (10) comporte une première portion (49) disposée, dans la position de travail du bras (5) et en suivant une direction perpendiculaire à la direction d'avancement (A), entre la première extrémité latérale (6) et la deuxième extrémité latérale (7),
dans une position du bras (5) dans laquelle le bras (5) s'étend latéralement par rapport au châssis (2), la première portion (49) peut quitter une première position de travail par le biais d'un premier pivotement vers l'arrière par rapport au bras (5), autour de l'axe de pivotement (26).

6. Machine selon l'une quelconque des revendications 1 à 5, ***caractérisée en ce que***
la deuxième unité de travail (11) comporte une deuxième portion (50) disposée, dans la position de travail du bras (5) et en suivant une direction perpendiculaire à la direction d'avancement (A) et orientée de la première extrémité latérale (6) vers la deuxième extrémité latérale (7), au-delà de la deuxième extrémité latérale (7),
dans une position du bras (5) dans laquelle le bras (5) s'étend latéralement par rapport au châssis (2), la deuxième portion (50) peut quitter une deuxième position de travail par le biais d'un deuxième pivotement vers l'avant par rapport au bras (5), autour de l'axe de pivotement (26).

7. Machine selon la revendication 5, ***caractérisée en ce que***
elle comporte un premier moyen de déclenchement (51) disposé entre le bras (5) et la première ou la deuxième unité de travail (10, 11),
le premier moyen de déclenchement (51) autorise le premier pivotement de la première portion (49) de la première unité de travail (10), seulement lorsqu'un effort exercé sur la première portion (49) entraîne un effort sur le premier moyen de déclenchement (51) dépassant un premier seuil déterminé.

8. Machine selon la revendication 7, ***caractérisée en ce que*** lorsque le premier moyen de déclenchement (51) autorise le premier pivotement de la première portion (49), le premier moyen de déclenchement (51) induit un pivotement supplémentaire vers le haut de la première portion (49) autour du premier axe géométrique (25).

9. Machine selon la revendication 6, ***caractérisée en ce que***
elle comporte un deuxième moyen de déclenchement (54) disposé entre le bras (5) et la première ou la deuxième unité de travail (10, 11),
lorsque la deuxième portion (50) effectue le deuxième pivotement, le deuxième moyen de déclenchement (54) induit un pivotement supplémentaire vers le haut de la deuxième portion (50) autour du deuxième axe géométrique (13).

10. Machine selon la revendication 5, ***caractérisée en ce que***
elle comporte un moyen de butée (56) autorisant le premier pivotement vers l'arrière de la première portion (49) de la première unité de travail (10) depuis la première position de travail,
le moyen de butée (56) limite un pivotement de la première portion (49) vers l'avant par rapport au bras (5), autour de l'axe de pivotement (26), depuis la première position de travail.

11. Machine selon la revendication 5, ***caractérisée en ce que***
la deuxième unité de travail (11) comporte une deuxième portion (50) disposée, dans la position de travail du bras (5) et en suivant une direction perpendiculaire à la direction d'avancement (A) et orientée de la première extrémité latérale (6) vers la deuxième extrémité latérale (7), au-delà de la deuxième extrémité latérale (7),
la machine (1) comporte un moyen de butée (56) limitant un pivotement de la deuxième portion (50) vers l'arrière par rapport au bras (5), autour de l'axe de pivotement (26), depuis une deuxième position relative au bras (5) occupée par la deuxième portion (50) pendant le travail de la machine (1).

12. Machine selon l'une quelconque des revendications 1 à 11, ***caractérisée en ce que*** le deuxième dispositif d'articulation (12) autorise chacune des première et deuxième unités de travail (10 et 11) à pivoter par rapport au bras (5) en position de travail, autour de son premier ou deuxième axe géométrique (25, 13) respectif, vers le haut et vers le bas à partir d'une position horizontale, indépendamment de l'autre des première et deuxième unités de travail (10 et 11).

13. Machine selon l'une quelconque des revendications 1 à 12, ***caractérisée en ce qu'***elle comporte un moyen d'allégement (61, 62) des première et deuxième unités de travail (10 et 11) disposé entre le bras (5) et l'une au moins des première et deuxième unités de travail (10 et 11).

14. Machine selon l'une quelconque des revendications 1 à 13, ***caractérisée en ce que*** la machine (1) est transposée d'une configuration de travail vers une configuration de manoeuvre et/ou une configuration de transport, par des pivotements respectifs de même sens,
de la deuxième unité de travail (11) par rapport au bras (5), vers le haut autour du deuxième axe géométrique (13),
et du bras (5) par rapport au châssis (2), autour d'un axe d'articulation (63) orienté, dans la position de travail du bras (5), sensiblement dans la direction d'avancement (A).

15. Machine selon l'une quelconque des revendications 1 à 13, ***caractérisée en ce que*** la machine (1) est transposée d'une configuration de travail vers une configuration de transport, par des pivotements respectifs de même sens,
de la deuxième unité de travail (11) par rapport au bras (5), d'un angle compris entre 90° et 180°, autour du deuxième axe géométrique (13),
et du bras (5) par rapport au châssis (2), autour d'un axe d'articulation (63) orienté, dans la position de travail du bras (5), sensiblement dans la direction d'avancement (A).

16. Machine selon l'une quelconque des revendications 1 à 13, ***caractérisée en ce que*** la machine (1) est transposée d'une configuration de travail vers une configuration de transport
par pivotement vers le haut de la deuxième unité de travail (11) par rapport au bras (5) en position de travail, autour du deuxième axe géométrique (13), d'un angle compris entre 90° et 180°,
puis par pivotement vers le haut du bras (5) par rapport au châssis (2).

## Patentansprüche

1. Landwirtschaftliche Maschine (1), insbesondere landwirtschaftliche Erntemaschine (1), mit:
- einem Rahmen (2), der an ein Kraftfahrzeug (3) angehängt werden kann, das geeignet ist, sich in eine Vorschubrichtung (A) fortzubewegen,
- einem Arm (5), der mit dem Rahmen (2) verbunden ist und sich zwischen einem ersten Längsende (6) des Arms (5) und einem zweiten Längsende (7) des Arms (5) erstreckt,
- einer ersten Anlenkungsvorrichtung (8), die den Ann (5) mit dem Rahmen (2) in der Nähe des ersten Längsendes (6) verbindet, wobei diese erste Anlenkungsvorrichtung (8) dem Arm (5) gestattet in Bezug auf den Rahmen (2) bewegt zu werden,
zwischen einer Arbeitsstellung, in der sich der Ann (5) in Bezug auf den Rahmen (2) seitlich erstreckt,
und einer Transportstellung, in der der Arm (5) in Bezug auf den Rahmen (2) geschwenkt ist, um, senkrecht zur Vorschubrichtung (A), eine geringere Abmessung aufzuweisen als in der Arbeitsstellung,
- einer ersten Arbeitseinheit (10), die mit dem Arm (5) verbunden ist und sich insbesondere, in der Arbeitsstellung des Arms (5) und gemäß einer zur Vorschubrichtung (A) senkrechten Richtung, vom zweiten Längsende (7) zum ersten Längsende (6) erstreckt,
- einer zweiten Arbeitseinheit (11), die mit dem Arm (5) verbunden ist und sich insbesondere, in der Arbeitsstellung des Arms (5) und gemäß einer Richtung, die senkrecht zur Vorschubrichtung (A) verläuft und vom ersten Längsende (6) zum zweiten Längsende (7) ausgerichtet ist, vom zweiten Längsende (7) des Arms (5) erstreckt,
- einer zweiten Anlenkungsvorrichtung (12), die vom Arm (5) in der Nähe des zweiten Längsendes (7) getragen wird,
wobei die zweite Anlenkungsvorrichtung (12) die zweite Arbeitseinheit (11) mit dem Arm (5) in der Nähe des zweiten Längsendes (7) verbindet,
wobei die zweite Anlenkungsvorrichtung (12) der zweiten Arbeitseinheit (11) gestattet in Bezug auf den Arm (5) um eine zweite geometrische Achse (13) zu schwenken, die sich in der Nähe des zweiten Längsendes (7) befindet und, wenn der Arm (5) in Arbeitsstellung ist, im Wesentlichen in Vorschubrichtung (A) ausgerichtet ist,
- einem Übertragungsmechanismus (14), der dazu bestimmt ist, Arbeitselemente (15, 16, 17) der ersten und zweiten Arbeitseinheit (10 und 11) anzutreiben, und der insbesondere vom Arm (5) in der Nähe des zweiten Längsendes (7) getragen wird,
***dadurch gekennzeichnet*, *dass***
die zweite Anlenkungsvorrichtung (12) die erste Arbeitseinheit (10) mit dem Arm (5) in der Nähe des zweiten Längsendes (7) verbindet,
die zweite Anlenkungsvorrichtung (12) bei der Arbeit der ersten Arbeitseinheit (10) gestattet in Bezug auf den Arm (5) um eine erste geometrische Achse (25) zu schwenken, die sich in der Nähe des zweiten Längsendes (7) befindet und, wenn der Arm (5) in Arbeitsstellung ist, im Wesentlichen in Vorschubrichtung (A) ausgerichtet ist,
die zweite Anlenkungsvorrichtung (12) eine Schwenkachse (26) umfasst, die in der Arbeitsstellung des Arms (5) nach oben ausgerichtet ist,
der Übertragungsmechanismus (14) schwenkbar um die Schwenkachse (26) am Arm (5) angebracht ist,
der Übertragungsmechanismus (14) und mindestens eine der ersten und zweiten Arbeitseinheit (10 und 11) in einer Stellung des Arms (5), in der sich der Arm (5) in Bezug auf den Rahmen (2) seitlich erstreckt, gemeinsam um die Schwenkachse (26) schwenken können.

2. Maschine nach Anspruch 1, ***dadurch gekennzeichnet, dass***
mindestens eine der ersten und zweiten Arbeitseinheit (10 und 11) ein Gestell (27, 28) umfasst,
das Gestell (27, 28) mindestens ein Arbeitselement (15, 16, 17) trägt, das in Bezug auf das Gestell (27, 28) mittels des Übertragungsmechanismus (14) und um eine Drehachse (18), die bei der Arbeit zumindest im Wesentlichen in Bezug auf das Gestell (27, 28) unbeweglich bleibt, in Drehung versetzt werden kann,
das Gestell (27, 28) auf gelenkige Art vom Arm (5) getragen wird mittels eines ersten Lagers (29, 30), das mit dem Gestell (27, 28) verbunden ist und das als Achse die entsprechende erste oder zweite geometrische Achse (25, 13) der mindestens einen der ersten und zweiten Arbeitseinheit (10 und 11) aufweist, und eines zweiten Lagers (31), das mit dem ersten Lager (29, 30) und dem Arm (5) verbunden ist und das als Achse die Schwenkachse (26) aufweist.

3. Maschine nach Anspruch 1 oder 2, ***dadurch gekennzeichnet*, *dass*** sich die entsprechende erste oder zweite geometrische Achse (25, 13) der mindestens einen der ersten und zweiten Arbeitseinheit (10 und 11) mindestens im Wesentlichen mit der Schwenkachse (26) kreuzt.

4. Maschine nach irgendeinem der Ansprüche 1 bis 3, ***dadurch gekennzeichnet, dass*** die zweite Anlenkungsvorrichtung (12) so ausgebildet ist, dass in einer Stellung des Arms (5), in der sich der Arm (5) seitlich in Bezug auf den Rahmen (2) erstreckt,
der Übertragungsmechanismus (14) und die erste Arbeitseinheit (10) gemeinsam um die Schwenkachse (26) schwenken können,
und der Übertragungsmechanismus (14) und die zweite Arbeitseinheit (11) gemeinsam um die Schwenkachse (26) schwenken können.

5. Maschine nach irgendeinem der Ansprüche 1 bis 4, ***dadurch gekennzeichnet, dass***
die erste Arbeitseinheit (10) einen ersten Bestandteil (49) umfasst, der in der Arbeitsstellung des Arms (5) und gemäß einer zur Vorschubrichtung (A) senkrecht verlaufenden Richtung zwischen dem ersten Längsende (6) und dem zweiten Längsende (7) angeordnet ist,
in einer Stellung des Arms (5), in der sich der Arm (5) in Bezug auf den Rahmen (2) seitlich erstreckt, der erste Bestandteil (49) die erste Arbeitsstellung durch ein erstes Rückwärtsschwenken um die Schwenkachse (26) in Bezug auf den Arm (5) verlassen kann.

6. Maschine nach irgendeinem der Ansprüche 1 bis 5, ***dadurch gekennzeichnet, dass***
die zweite Arbeitseinheit (11) einen zweiten Bestandteil (50) umfasst, der in der Arbeitsstellung des Arms (5) und gemäß einer Richtung, die senkrecht zur Vorschubrichtung (A) verläuft und vom ersten Längsende (6) zum zweiten Längsende (7) ausgerichtet ist, jenseits des zweiten Längsendes (7) angeordnet ist,
in einer Stellung des Arms (5), in der sich der Arm (5) in Bezug auf den Rahmen (2) seitlich erstreckt, der zweite Bestandteil (50) eine zweite Arbeitsstellung durch ein zweites Vorwärtsschwenken um die Schwenkachse (26) in Bezug auf den Arm (5) verlassen kann.

7. Maschine nach Anspruch 5, ***dadurch gekennzeichnet, dass***
sie ein erstes Auslösemittel (51) umfasst, das zwischen dem Arm (5) und der ersten oder zweiten Arbeitseinheit (10, 11) angeordnet ist,
das erste Auslösemittel (51) das erste Schwenken des ersten Bestandteils (49) der ersten Arbeitseinheit (10) nur dann gestattet, wenn eine auf den ersten Bestandteil (49) ausgeübte Kraft eine Kraft auf das erste Auslösemittel (51) bewirkt, die einen ersten bestimmten Grenzwert übersteigt.

8. Maschine nach Anspruch 7, ***dadurch gekennzeichnet, dass***, wenn das erste Auslösemittel (51) das erste Schwenken des ersten Bestandteils (49) gestattet, das erste Auslösemittel (51) ein zusätzliches Aufwärtsschwenken des ersten Bestandteils (49) um die erste geometrische Achse (25) bewirkt.

9. Maschine nach Anspruch 6, ***dadurch gekennzeichnet*, *dass***
sie ein zweites Auslösemittel (54) umfasst, das zwischen dem Arm (5) und der ersten oder zweiten Arbeitseinheit (10, 11) angeordnet ist,
wenn der zweite Bestandteil (50) das zweite Schwenken ausführt, das zweite Auslösemittel (54) ein zusätzliches Aufwärtsschwenken des zweiten Bestandteils (50) um die zweite geometrische Achse (13) bewirkt.

10. Maschine nach Anspruch 5, ***dadurch gekennzeichnet*, *dass***
sie ein Anschlagmittel (56) umfasst, das das erste Rückwärtsschwenken des ersten Bestandteils (49) der ersten Arbeitseinheit (10) ausgehend von der ersten Arbeitsstellung gestattet,
das Anschlagmittel (56) ein Vorwärtsschwenken des ersten Bestandteils (49) um die Schwenkachse (26) in Bezug auf den Arm (5) ausgehend von der ersten Arbeitsstellung begrenzt.

11. Maschine nach Anspruch 5, ***dadurch gekennzeichnet*, *dass***
die zweite Arbeitseinheit (11) einen zweiten Bestandteil (50) umfasst, der in der Arbeitsstellung des Arms (5) und gemäß einer Richtung, die senkrecht zur Vorschubrichtung (A) verläuft und vom ersten Längsende (6) zum zweiten Längsende (7) ausgerichtet ist, jenseits des zweiten Längsendes (7) angeordnet ist,
die Maschine (1) ein Anschlagmittel (56) umfasst, das ein Rückwärtsschwenken des zweiten Bestandteils (50) in Bezug auf den Arm (5) um die Schwenkachse (26) ausgehend von einer zweiten Stellung bezüglich des Arms (5), die vom zweiten Bestandteil (50) bei der Arbeit der Maschine (1) eingenommen wird, begrenzt.

12. Maschine nach irgendeinem der Ansprüche 1 bis 11, ***dadurch gekennzeichnet*, *dass*** die zweite Anlenkungsvorrichtung (12) jeder der ersten und zweiten Arbeitseinheit (10 und 11) gestattet, in Bezug auf den Arm (5) in Arbeitsstellung um ihre jeweilige erste oder zweite geometrische Achse (25, 13) nach oben und nach unten ausgehend von einer horizontalen Stellung zu schwenken, unabhängig von der jeweils anderen der ersten und zweiten Arbeitseinheit (10 und 11).

13. Maschine nach irgendeinem der Ansprüche 1 bis 12, ***dadurch gekennzeichnet, dass*** sie ein Entlastungsmittel (61, 62) der ersten und zweiten Arbeitseinheit (10 und 11) umfasst, das zwischen dem Arm (5) und der mindestens einen aus erster und zweiter Arbeitseinheit (10 und 11) angeordnet ist.

14. Maschine nach irgendeinem der Ansprüche 1 bis 13, ***dadurch gekennzeichnet, dass*** die Maschine (1) von einer Arbeitskonfiguration in eine Betätigungs- und/oder Transportkonfiguration gebracht wird, durch jeweiliges Schwenken in die gleiche Richtung
der zweiten Arbeitseinheit (11) in Bezug auf den Arm (5), nach oben um die zweite geometrische Achse (13),
und des Arms (5) in Bezug auf den Rahmen (2), um eine Gelenkachse (63), die in der Arbeitsstellung des Arms (5) im Wesentlichen in die Vorschubrichtung (A) ausgerichtet ist.

15. Maschine nach irgendeinem der Ansprüche 1 bis 13, ***dadurch gekennzeichnet, dass*** die Maschine (1) von einer Arbeitskonfiguration in eine Transportkonfiguration gebracht wird, durch jeweiliges Schwenken in die gleiche Richtung
der zweiten Arbeitseinheit (11) in Bezug auf den Arm (5) in einem Winkel zwischen 90° und 180° um die zweite geometrische Achse (13),
und des Arms (5) in Bezug auf den Rahmen (2), um eine Gelenkachse (63), die in der Arbeitsstellung des Arms (5) im Wesentlichen in die Vorschubrichtung (A) ausgerichtet ist.

16. Maschine nach irgendeinem der Ansprüche 1 bis 13, ***dadurch gekennzeichnet, dass*** die Maschine (1) von einer Arbeitskonfiguration in eine Transportkonfiguration gebracht wird,
durch Aufwärtsschwenken der zweiten Arbeitseinheit (11) in Bezug auf den Arm (5) in Arbeitsstellung, um die zweite geometrische Achse (13), in einem Winkel zwischen 90° und 180°,
dann durch Aufwärtsschwenken des Arms (5) in Bezug auf den Rahmen (2).

## Claims

1. Agricultural machine (1), in particular agricultural machine (1) for harvesting plants, comprising:
- a chassis (2) that can be attached to a motor vehicle (3) likely to move in a direction of advance (A);
- an arm (5) connected to the chassis (2) and extending between a first lateral end (6) of the arm (5) and a second lateral end (7) of the arm (5);
- a first articulation device (8) connecting the arm (5) to the chassis (2) in the vicinity of the first lateral end (6), this first articulation device (8) allowing the arm (5) to be moved relative to the chassis (2)
between a work position, in which the arm (5) extends laterally relative to the chassis (2);
and a transport position, in which the arm (5) is swivelled relative to the chassis (2) so that, perpendicularly to the direction of advance (A), it is smaller in size than in the work position;
- a first work unit (10) connected to the arm (5) and extending in particular, in the work position of the arm (5) and in a direction perpendicular to the direction of advance (A), from the second lateral end (7) towards the first lateral end (6);
- a second work unit (11) connected to the arm (5) and extending in particular, in the work position of the arm (5) and in a direction perpendicular to the direction of advance (A) and oriented from the first lateral end (6) towards the second lateral end (7), from the second lateral end (7) of the arm (5);
- a second articulation device (12) carried by the arm (5) in the vicinity of the second lateral end (7);
the second articulation device (12) connecting the second work unit (11) to the arm (5) in the vicinity of the second lateral end (7);
the second articulation device (12) allowing the second work unit (11) to swivel relative to the arm (5) around a second geometric axis (13) situated in the vicinity of the second lateral end (7) and oriented, when the arm (5) is in a work position, substantially in the direction of advance (A);
- a drive mechanism (14) intended to drive work elements (15, 16, 17) of the first and second work units (10 and 11), being in particular carried by the arm (5) in the vicinity of the second lateral end (7);
***characterised in that***
the second articulation device (12) connects the first work unit (10) to the arm (5) in the vicinity of the second lateral end (7);
the second articulation device (12) allows, during work, the first work unit (10) to swivel relative to the arm (5) around a first geometric axis (25) situated in the vicinity of the second lateral end (7) and oriented, when the arm (5) is in work position, substantially in the direction of advance (A);
the second articulation device (12) comprises a swivel pin (26) oriented upwards in the work position of the arm (5);
the drive mechanism (14) has a swivel mounting on the arm (5) around the swivel pin (26);
the drive mechanism (14) and at least one of the first and second work units (10 and 11) can, in a position of the arm (5) in which the arm (5) extends laterally relative to the chassis (2), jointly swivel around the swivel pin (26).

2. Machine according to claim 1, ***characterised in that***
the said at least one of the first and second work units (10 and 11) comprises a frame (27, 28);
the frame (27, 28) carries at least one work element (15, 16, 17) that can be driven in rotation relative to the frame (27, 28) by means of the drive mechanism (14) and around a rotation axis (18) that remains, during work, at least substantially immobile relative to the frame (27, 28);
the frame (27, 28) is carried by the arm (5), in an articulated manner, by means of a first bearing (29, 30) connected to the frame (27, 28) and having as its axis the corresponding first or second geometric axis (25, 13) of the said at least one of the first and second work units (10 and 11), and of a second bearing (31) connected to the first bearing (29, 30) and the arm (5) and having as its axis the swivel pin (26).

3. Machine according to claim 1 or 2, ***characterised in that*** the corresponding first or second geometric axis (25, 13) of the said at least one of the first and second work units (10 and 11) intersects at least substantially the swivel pin (26).

4. Machine according to any one of the claims 1 to 3, ***characterised in that*** the second articulation device (12) is configured so that in a position of the arm (5) in which the arm (5) extends laterally relative to the chassis (2):
the drive mechanism (14) and the first work unit (10) can jointly swivel around the swivel pin (26);
and the drive mechanism (14) and the second work unit (11) can jointly swivel around the swivel pin (26).

5. Machine according to any one of the claims 1 to 4, ***characterised in that***
the first work unit (10) comprises a first portion (49) positioned, in the work position of the arm (5) and in a direction perpendicular to the direction of advance (A), between the first lateral end (6) and the second lateral end (7);
in a position of the arm (5) in which the arm (5) extends laterally relative to the chassis (2), the first portion (49) can leave a first work position by means of a first swivelling backwards relative to the arm (5) around the swivel pin (26).

6. Machine according to any one of the claims 1 to 5, ***characterised in that***
the second work unit (11) comprises a second portion (50) positioned, in the work position of the arm (5) and in a direction perpendicular to the direction of advance (A) and oriented from the first lateral end (6) towards the second lateral end (7), beyond the second lateral end (7);
in a position of the arm (5) in which the arm (5) extends laterally relative to the chassis (2), the second portion (50) can leave a second work position by means of a second swivelling forwards relative to the arm (5) around the swivel pin (26).

7. Machine according to claim 5, ***characterised in that***
it comprises a first activation means (51) positioned between the arm (5) and the first or second work unit (10, 11);
the first activation means (51) allows the first swivelling of the first portion (49) of the first work unit (10), only when a force exerted on the first portion (49) causes a force on the first activation means (51) exceeding a first determined threshold.

8. Machine according to claim 7, ***characterised in that*** when the first activation means (51) allows the first swivelling of the first portion (49), the first activation means (51) causes an additional upwards swivelling of the first portion (49) around the first geometric axis (25).

9. Machine according to claim 6, ***characterised in that***
it comprises a second activation means (54) positioned between the arm (5) and the first or second work unit (10, 11);
when the second portion (50) performs the second swivelling, the second activation means (54) causes an additional upwards swivelling of the second portion (50) around the second geometric axis (13).

10. Machine according to claim 5, ***characterised in that***
it comprises a stop means (56) allowing the first backward swivelling of the first portion (49) of the first work unit (10) from the first work position;
the stop means (56) limits a forward swivelling of the first portion (49) relative to the arm (5), around the swivel pin (26), from the first work position.

11. Machine according to claim 5, ***characterised in that***
the second work unit (11) comprises a second portion (50) positioned, in the work position of the arm (5) and in a direction perpendicular to the direction of advance (A) and oriented from the first lateral end (6) towards the second lateral end (7), beyond the second lateral end (7);
the machine (1) comprises a stop means (56) limiting a swivelling of the second portion (50) backwards relative to the arm (5), around the swivel pin (26), from a second position relative to the arm (5) occupied by the second portion (50) during the work of the machine (1).

12. Machine according to any one of the claims 1 to 11, ***characterised in that*** the second articulation device (12) allows each of the first and second work units (10 and 11) to swivel relative to the arm (5) in work position, around its respective first or second geometric axis (25, 13), upwards and downwards from a horizontal position, independently of the other of the first and second work units (10 and 11).

13. Machine according to any one of the claims 1 to 12, ***characterised in that*** it comprises a lightening means (61, 62) for the first and second work units (10 and 11) positioned between the arm (5) and the at least one of the first and second work units (10 and 11).

14. Machine according to any one of the claims 1 to 13, ***characterised in that*** the machine (1) is transposed from a work configuration to a manoeuvre configuration and/or a transport configuration by respective swivelling movements in the same direction:
of the second work unit (11) relative to the arm (5), upwards around the second geometric axis (13);
and of the arm (5) relative to the chassis (2), around an articulation axis (63) oriented, in the work position of the arm (5), substantially in the direction of advance (A).

15. Machine according to any one of the claims 1 to 13, ***characterised in that*** the machine (1) is transposed from a work configuration to a transport configuration by respective swivelling movements in the same direction:
of the second work unit (11) relative to the arm (5), of an angle between 90° and 180°, around the second geometric axis (13);
and of the arm (5) relative to the chassis (2), around an articulation axis (63) oriented, in the work position of the arm (5), substantially in the direction of advance (A).

16. Machine according to any one of the claims 1 to 13, ***characterised in that*** the machine (1) is transposed from a work configuration to a transport configuration:
by upwards swivelling of the second work unit (11) relative to the arm (5) in a work position, around the second geometric axis (13), of an angle between 90° and 180°;
then by upwards swivelling of the arm (5) relative to the chassis (2).
